# EUROPEAN PATENT SPECIFICATION

(11) **EP 0 545 683 B1**
(45) Date of publication and mention of the grant of the patent: **03.07.1996**
(21) Application number: 92310995.3
(22) Date of filing: 02.12.1992
(51) Int. Cl.: C02F 1/38, C02F 11/12, C02F 1/02, C10L 1/32

(54) **Disposal of sewage sludge**
Entsorgung von Klärschlamm
Elimination de boue d'égout

(30) Priority: 02.12.1991 US 801160; 02.12.1991 US 801326
(43) Date of publication of application: 09.06.1993
(73) Proprietor: TEXACO DEVELOPMENT CORPORATION, White Plains, New York 10650 (US)
(72) Inventor: Khan, Motasimur Rashid, Wappingers Falls, NY 12590 (US); Zang, Richard Berne, Sandy Hook, CT 06482 (US); Albert, Christine Cornelia, Peekskill, NY 10566 (US)
(74) Representative: Simpson, Alison Elizabeth Fraser

(56) References cited:
- EP-A- 0 411 880
- EP-A- 0 411 881
- DE-B- 2 051 234
- US-A- 4 762 527

## Description

### Field of the Invention

This invention relates to the disposal of sanitary sewage sludge by producing a pumpable slurry of sewage sludge and solid carbonaceous fuel for burning as fuel in a furnace, boiler, incinerator or a gasifier.

Treatment of sewage sludge is discussed in coassigned U.S. Patent No. 3,507,788. Sewage sludge is gasified in a partial oxidation process described in coassigned U.S. Patent No. 3,687,646. Upgrading aqueous slurries of sewage sludge by shearing without heating is described in coassigned U.S. Patent No. 4,933,086. Agglomerating the organic matter in aqueous slurries of sewage sludge by heating, is described in coassigned U.S. Patent No. 4,983,296. However, none of these references taken singly or in combination, teach or suggest the subject invention by which concentrated aqueous slurries of sewage sludge are subjected to a hydrothermal treatment, and shearing to produce a pumpable slurry including a solid carbonaceous fuel which may be low grade solid carbonaceous fuel to produce a feed for burning in a partial oxidation gasifier, furnace, boiler, or incinerator.

### SUMMARY OF THE INVENTION

An object of the invention is to provide improved pumpable slurries of sewage sludge suitable for burning as fuel in a furnace, boiler, a gasifier or incinerator.

This invention provides a process according to Claim 1.

The pumpable slurry of sewage sludge and solid carbonaceous is burnt in a partial oxidation gasifier, furnace, boiler, or incinerator to produce a hot raw effluent gas stream. In one embodiment to avoid contaminating the environment, the effluent gas stream may be cleaned, purified, and non-contaminating fly-ash and slag are separated from the gas stream.

### DESCRIPTION OF THE INVENTION

Sewage sludge is a heterogeneous mixture of complex organic and inorganic materials. The term "sewage sludge" as used herein may be broadly defined as "water-carried wastes", particularly from municipal sanitary sewage lines, containing at least one of the following: body water (excreta), household wastes, community waste such as street washings, etc., and industrial wastes and sludges. The total solids content of the sewage in municipal lines is usually about 200 parts per million (p.p.m.) or more, usually 500 p.p.m. or more. The solids in sewage are mostly animal or vegetable substances, "organic matter", i.e., fats, carbohydrates, and proteins. Some mineral or inorganic constituents present include sand and clay, as well as the common mineral salts found in the water supply. Sewage sludge is obtained from raw sewage and may contain a number of pathogens known to be health hazards to humans. Almost any type of microorganism may be found in sewage, including bacteria, protozoans, viruses and fungi.

Sewage sludge does not behave as a Newtonian fluid. Accordingly, any analyses of sludge flow behavior in pipes is rather difficult. A major problem is the energy (head) loss in sludge transfer due to friction. Sludge slurries with 10-15% concentration can be pumped provided high friction losses are allowable. The physical state of sludge depends upon the amount of moisture present in the sludge and on the nature of the sludge. As the moisture content decreases, the sludge changes state from a true liquid to a semi-solid and ultimately to a dry solid. Through the use of gravity thickening the sludge could approach 3-5% by weight of solids concentration. However, the void spaces between the particles are still filled with water. As the moisture content decreases further, the solids are pushed closer together. The capillary forces continue to increase in the pore structure which progressively decreases the sludge volume. At this point the sludge is considered almost solid (plastic or semi-solid) rather than a liquid. With a further reduction in water content the nature of sludge is changed to such a state that it will not flow under its own weight. Plastic sludges are cohesive in nature due to the surface chemical activity and the bonding properties of the organic and inorganic colloidal materials present.

With landfills closing, ocean dumping being curtailed, and high-technology incinerators becoming unpopular in many areas, communities are finding that it is getting increasingly more difficult and expensive to dispose of their sewage sludge. Pumpable aqueous slurries of sewage sludge are made by the subject process containing high concentrations of sewage sludge. The pumpable slurry may be used as a fuel in a partial oxidation gas generator and may be thereby disposed of without contaminating the atmosphere. After cleaning and removal of undesirable gases e.g. H₂O, H₂S, COS, CO₂, a non-polluting hot raw effluent gas stream comprising at least one of the following is produced: synthesis gas, reducing gas and fuel gas. In one embodiment, the slurry may be burned by complete combustion in a boiler thereby producing by-product steam and hot water. Alternatively, the pumpable slurry may be incinerated or used as fuel in a furnace. Noxious sewage sludge is safely disposed of by the subject process without polluting the nation's environment. Non-contaminating ash and slag are separated from the gas stream. The ash and slag may be used for road bed fill and for making cement blocks. Further, the subject process allows a greater amount of sewage sludge to be fed to a partial oxidation gasifier, boiler, or incinerator while requiring less energy per unit mass of sewage sludge processed.

A typical ultimate analysis of sewage sludge is shown in Table I. A typical ultimate analysis of inert non-combustible materials in sewage sludge is shown in Table II.

**TABLE I**

| TYPICAL ULTIMATE ANALYSIS OF COMBUSTIBLES IN SEWAGE SLUDGE | |
|---|---|
| ELEMENT | WT.% |
| CARBON | 54.6 |
| HYDROGEN | 7.9 |
| NITROGEN | 4.5 |
| OXYGEN | 32.0 |
| SULFUR | 1.0 |

**TABLE II**

| TYPICAL ANALYSIS OF INERT NON-COMBUSTIBLE MATERIALS IN SEWAGE SLUDGE | |
|---|---|
| ELEMENT | MG/KG DRY SOLIDS |
| Total Sodium | 1,515 |
| Water Soluble Sodium (mg/1) | 83 |
| Total Potassium | 800 |
| Water Soluble Potassium (mg/1) | 53 |
| Arsenic | 4.58 |
| Beryllium | 0.38 |
| Cadmium | 3.27 |
| Chromium | 244 |
| Copper | 289 |
| Iron | 150 |
| Lead | 147 |
| Zinc | 468 |
| Nickel | 63 |
| Mercury | 0.68 |

The economics of gasifying sewage sludge depend greatly on the tipping fee received from the sludge generating community and the concentration of sewage sludge that can be included in a pumpable slurry destined for the gasifier. Mixtures of sewage sludge containing about 10 to 55 wt.% of solids and liquid hydrocarbonaceous or solid carbonaceous fuel that contain sufficient sewage sludge to be profitably burned are ordinarily too viscous to be pumped. This problem and others have been overcome by embodiments of the subject invention.

Mixtures of sewage sludge and low grade solid carbonaceous fuel e.g. low rank coal or peat that contain sufficient sewage sludge to be profitably burned were also found to be too viscous to be pumped. This problem and others have been overcome by other embodiments of the subject invention.

Sewage sludge is obtained from raw sewage by conventional processing steps and equipment. For example, the sewage from municipal sewage lines is passed through bar screens for the removal of large pieces of stone, wood, metal, and other trash which would clog channels or damage pumps. Coarse heavy inorganic noncombustibles, i.e. gravel, cinders, and sand are then settled out in a grit chamber. The sewage is then separated into an aqueous suspension of sewage sludge and liquids. Concentration of the sewage may be accomplished by any suitable way for separating solids and liquids, e.g. gravity settling, filtration, centrifugation, hydroclone, or a combination thereof. For example, a preferable preliminary procedure is to introduce the screened over-flow from the grit chamber into a primary sedimentation tank such as a continuous clarifier as shown in Perry's Chemical Engineers' Handbook, McGraw-Hill, Fourth Edition, 1963, page 19-50. Detention time in the sedimentation tank is sufficient for producing a pumpable aqueous slurry of primary sludge having a solids content of about .5 to 20 wt.%, in about 1 to 24 hours. The primary sedimentation tank may also serve as a hold-up tank to even out discontinuities in the sewage composition. Alternatively, a separate holding tank may be used. In one embodiment, an aqueous slurry of secondary sewage sludge is introduced into the holding tank and mixed with the primary sewage sludge. Secondary sewage sludge has a solids content in the range of about 1 to 10 wt.% and is derived from the liquid overflow from the previously mentioned primary sedimentation tank. The liquid overflow is processed in a conventional manner in order to produce secondary sewage sludge, to reduce the BOD and organic solids content, and to purify and demineralize the waste water which is separated from the secondary sewage sludge. Treatment of the liquid overflow from the primary sedimentation tank may include a combination of any or preferably all of the following steps, depending upon the end use of the water: pH adjustment; reduction of organic solids and BOD to about 20 parts per million or below, preferably by aerated biochemical treatment; clarification, optionally with coagulation; filtration or centrifugation; demineralizing; activated carbon treatment; and disinfection to control bacteria for example by chlorination. Excessively acidic or basic waste waters may be neutralized and the pH adjusted to a level in the range of about 6 to 9. Anaerobic and aerobic biological treatment processes are preferably used to economically abate the bacterial oxygen-consuming pollution caused by the discharge of waste water contaminated with low concentrations of organic matter. Suitable conventional biological processes that may be used include activated sludge units, aerated stabilization basins, and trickling filters. For additional description, see coassigned U.S. Patent 3,687,646, which is incorporated herein by reference.

The water separated from the sewage sludge may be purified by conventional means. The purified water may be then used subsequently in the process. For example, the water may be used as a coolant of the product gas from the partial oxidation gasifier by direct contact in a quench tank or by indirect heat exchange in a waste heat boiler. By-product steam may be produced after dissolved solids are removed. The hot water or steam may be used for indirect heat exchange with other streams in the subject process. For example, the hot water or steam may be used to preheat the aqueous suspension of sewage sludge. Excess water may be discharged from the system or used externally for industrial applications. The sludge underflow from the primary sedimentation tank comprising primary sewage sludge or from the holding tank comprising primary sewage sludge in admixture with secondary sewage sludge having a solids content of at least 3 wt.% is dewatered further to produce an aqueous slurry of sewage sludge having a solids content in the range of about 10 to 30 wt.%. Dewatering may be achieved by conventional means, e.g. filter press, hydroclone, centrifuge.

Preparation of a highly loaded sludge-water slurry with desirable rheological properties requires an understanding of primary sludge characteristics and the relationship of these characteristics to the basic interactions among sludge particles. Since the sludge materials contain numerous chemically active sites, the factors which influence the slurry properties are many.

In a preferred embodiment in accordance with a first aspect of the present invention, an aqueous slurry of sewage sludge having a solids content in the range of about 0.5 to 20 wt.% is concentrated by a first conventional continuous belt filter press, and optionally by a second conventional high intensity belt filter press to produce a slurry of dewatered sewage sludge having a solids content in the range of about 10 to 55 wt.%, such as about 20 to 40 wt.%, say 25 wt.%, and a viscosity in the range of about 10-1000 Pa·s (10,000 to 1,000,000 centipoise) when measured at a temperature of about 82.2°C (180°F). Alternatively, a conventional or an advanced centrifuge could be used to achieve solids content in the range 10 to 55 wt.%.

It was unexpectedly found that the morphology of sewage sludge is changed by said mechanical treatment of the sewage sludge. For example, bound water is released and slurry making is optimized. Slurries containing a higher concentration of solids can be achieved by means of such mechanical dewatering equipment. By means of a conventional continuous belt pressure filter, the aqueous slurry of sewage sludge is pressed between two moving belts that pass between and over rollers. A surface pressure in the range of about 137.9 KPa-689.5 Kpa (20 to 100 pounds per square inch (psi)) for a period in the range of about 1/2 to 60 minutes, such as about 1 to 30 minutes, say about 3 minutes, and at a temperature in the range of about ambient to 148.9°C 300°F, say about 100°C to 140.6°C (212°F to 285°F), is applied to the aqueous slurry of sewage sludge. Liquid water is thereby quickly pressed from the material between the belts. For example, the Andritz Co. Continuous Press Filter (CPF) operating at ambient conditions with a surface pressure of about 20 psi will produce a press cake having a solids content in the range of about 10 to 50 wt.%. Optionally, on discharge from the CPF, the press cake may be optionally further dewatered in a conventional Andritz Co. High Intensity Press (HIP) continuous belt filter press operating with a surface pressure in the range of about 689.5 KPa to 1724 KPa (100 to 250 psi) for a period in the range of about 1/2 to 60 minutes, such as about 1-30 minutes, say about 3 minutes, and at a temperature in the range of about ambient to 148.9°C (300°F), say about 100°C to 140.6°C (212°F to 285°F) to produce a press cake having a solids content in the range of about 15 to 55 wt.%. If further dewatering is required, prior to filtering in the HIP, the press cake from the CPF is mixed with a conventional inorganic filter additive e.g. compounds of iron, calcium, silicon, and mixtures thereof in the amount of about 5-30 wt.% of the total solids and having a particle size of less than about 2 mm, such as about 1 mm. A typical filter-aid is CaCO₃. The solids content of the press cake from the HIP may be thereby increased to about 20 to 60 wt.%.

Preferably, the aforesaid belt filter pressing takes place before any significant bacterial action occurs that consumes carbon and organic materials in the sewage sludge.

The dewatered sludge from the CPF and/or HIP is pumped into a hydrothermal heat treatment reactor by means of a conventional positive displacement pump, such as a Schwing pump. Pumping applies a shear to the dewatered sewage sludge so that its viscosity is reduced to less than about 5000 centipoise when measured at 82.2°C (180°F).

Heat treating of the dewatered slurry of sewage sludge takes place in conventional double tube heat exchangers, spiral exchangers or shell and tube heat exchangers. The highly dewatered sewage slude is treated at a temperature in the range of about 48.9°C to 287.8°C (120°F to 550°F) in the absence of air and at a pressure which is at or above the vapor pressure of water at the heat treating temperature. For example, the sewage sludge is heated in two double-tube heat exchangers in the following two consecutive stages: (a) heating at a temperature in the range of about 48.9°C to 162.8°C (120°F to 325°F) in the absence of air for a residence time of about 1 to 10 minutes and with a pressure difference from the inlet to outlet of said stage in the range of about 2068.5 to 3792 KPa (300 to 550 pounds per square inch (psi)); (b) followed by heating at a temperature in the range of about 162.8°C to 287.8°C (325°F to 550°F) in the absence of air for a residence time of about 2 to 20 minutes and with a pressure difference from the inlet to outlet of said stage of less than about 689.5 KPa (100 pounds per square inch).

The hydrothermally treated sewage sludge is held at a temperature in the range of about 232.2°C to 287.8°C (450°F to 550°F) in the absence of air for a residence time of about 2 to 120 minutes and at a pressure which is at or above the vapor pressure of water at said holding temperature to produce a pumpable aqueous slurry of sewage sludge having a viscosity of less than about 0.6 Pa·S (600 centipoise) when measured at about 82.2°C (180°F).

The previously described dewatered sewage sludge may be heated by direct or indirect heat exchange in an autoclave. For example, steam or partially cooled synthesis gas produced downstream in the partial oxidation process may be passed in direct or indirect heat exchange with the slurry of sewage sludge. Hydrothermally treating and holding the dewatered sewage sludge at a temperature in the range of about 232°C-288°C (450°F to 550°F) as previously described causes decarboxylation and dehydrogenation of the sewage sludge. The sewage sludge fibers and gel structure break down. Sewage sludge with a particle size in the range of about 5 to 20 micrometre is thereby produced. Pumpable aqueous slurries of sewage sludge are thereby produced. Off-gas from the reactor e.g. autoclave, comprising CO₂, H₂O, H₂S and COS is sent to a conventional odor control unit and/or disinfecting zone. Noxious gases are thereby safely disposed of without polluting the nation's environment.

In one embodiment, hot water at a temperature in the range of about 148.9°C to 260°C (300°F to 500°F) may be removed from the reactor and may be used in indirect heat exchange with the slurry of sewage sludge going to the hydrothermal reactor. In another embodiment, at least a portion of the fuel gas produced by the subject partial oxidation mode is used to provide the thermal energy in the aforesaid heat treating step.

In still another embodiment a heat transfer fluid, such as silicone oil, may be used to cool the hydrothermally treated sewage sludge. The hot heat transfer fluid may be then used to preheat the slurry of sewage sludge during the hydrothermal treatment.

After being held as previously described, the hydrothermally treated pumpable aqueous slurry is cooled to a temperature in the range of about ambient to less than about 93.3°C (200°F). The heated sewage sludge at a temperature in the range of about 232.2°C to 287.8°C (450°F to 550°C) may be cooled in one or more stages. For example, in a two stage cooling process, in the first stage the heated sewage sludge is cooled to a temperature in the range of about 93.3°C to 148.9°C (200°F to 300°F) by indirect heat exchange. For example, a heat exchange fluid may be used to cool the hydrothermally treated sewage sludge from the storage tank by indirect heat exchange. The hot heat exchange fluid is then used to heat the slurry of sewage sludge during the hydrothermal treatment. The thermal efficiency of the process is thereby improved. Subsequently, the sewage sludge from the first stage cooler is further cooled in a second stage indirect heat exchanger with water to a temperature of less than about 93.3°C (200°F). A highly pumpable aqueous slurry of dewatered sewage sludge having a solids content in the range of about 10 to 55 wt.% is thereby provided having a higher heating value (HHV) in the range of about 13.9 MJ/Kg to 18.6 MJ/Kg (6,000 to 8,000 BTU/Lb). All of the higher heating values expressed herein are on the dry basis for the materials. The pressure in the cooling zone is in the range of about atmospheric pressure to the saturated vapor pressure of water at the temperature in cooling zone. The "trapped" water present in the raw sewage sludge is now separated and provides a slurry with a low viscosity, 0.05 Pas to 0.6 Pas (e.g. 50 cp - 600 cp) when measured at 82.2°C (180°F).

After being cooled, the heat treated slurry of sewage sludge is sheared at a temperature in the range of about ambient to 100°C (212°F), say about 65.6°C to 87.8°C (150°F to 190°F) in the absence of air for a period in the range of about 10 seconds to 180 minutes at a shear rate of about 0.5 to 360 sec⁻¹. A sheared highly pumpable fluid sewage sludge is thereby produced having viscosity in the range of about 50 centipoise to 600 centipoise when measured at 82.2°C (180°F). The shearing may take place in a conventional steam jacketed mixing tank equipped with a propeller which for example may rotate at a speed in the range of about 0.5 to 360 revolutions per minute. Other suitable shearing means may be used. Shearing is a very effective way to improve the slurrying characteristics and solids content of dewatered sewage sludge. More extensive shearing of sewage sludge is discussed in coassigned U.S. Patent Numbers 4,933,086 and 4,983,296, which are incorporated herein by reference.

The sheared aqueous slurry of dewatered sewage sludge has a solids content in the range of about 10 to 55 wt.% and has a higher heating value (HHV) in the range of about 13.9 MJ/Kg-18.6 MJ/Kg (6,000 to 8,000 BTU/Lb). The sheared slurry of sewage sludge is pumped to a conventional grinder at a temperature in the range of about ambient to 100°C (212°F), such as about 65.6°C to 93.3°C (150°F to 200°F), say about 93.3°C (200°F) in the absence of air.

In the grinder, the sheared aqueous slurry of sewage sludge is ground together with a solid carbonaceous fuel to produce a pumpable homogeneous slurry having a solids content in the range of about 45 to 70 wt.% and a sewage sludge to solid carbonaceous fuel wt. ratio in the range of about 3 to 7 parts by wt. of sewage sludge to 3 to 7 parts by wt. of solid carbonaceous fuel. The viscosity of the pumpable slurry is in the range of about 0.4 to 2 PaS (400 to 2000 centipoise) when measured at about 82.2°C (180°F). The solid carbonaceous fuel is selected from the group consisting of coal, petroleum coke, rubber (such as ground rubber tires), and mixtures thereof. While the solid carbonaceous fuel is preferably introduced into the grinder as a dry comminuted material, it may also be introduced into the grinder as a pumpable highly concentrated slurry of solid carbonaceous fuel, such as an aqueous slurry of coal having a solids content of at least about 50 wt.%. After grinding, the solids in the pumpable aqueous slurry of sewage sludge and solid carbonaceous fuel have a particle size so that 100 wt.% passes through ASTM E11 Standard Sieve Designation 1.40mm.

In one embodiment, a nonionic additive ethoxylated nonylphenol at a concentration of about 0.1 to 5 wt.% of the slurry is introduced into the grinding means to enhance pumpability of the aqueous slurry of sewage sludge and solid carbonaceous fuel.

The pumpable slurry leaving the grinding zone is burned in a partial oxidation gasifier, furnace, boiler, or incinerator to produce an effluent gas stream. In one embodiment, the effluent gas stream is washed and purified. Non-polluting ash and noxious gases are removed by conventional means. Contamination of the environment is prevented.

The term "coal" as used herein is intended to mean a material selected from the group consisting of anthracite, bituminous, lignite, residue derived from coal liquefaction, shale, asphalt, and mixtures thereof. The term "petroleum coke" is used herein in its conventional manner and includes petroleum coke made by conventional delayed or fluid coking processes. The term "and/or" is used herein in its normal sense. For example, "A and/or B" means either A or B, or A and B.

In a preferred embodiment, the fuel feedstream, for example the aqueous slurry of sewage sludge and solid carbonaceous fuel and a stream of free-oxygen containing gas are introduced by means of a burner into a free-flow unobstructed down-flowing vertical refractory lined steel wall pressure vessel where the partial oxidation reaction takes place. A typical gas generator is shown and described in coassigned U.S. Patent No. 3,544,291, which is incorporated herein by reference. The burner assembly is inserted downward through a top inlet port of the non-catalytic synthesis gas generator. The burner extends along the central longitudinal axis of the gas generator with the downstream end discharging a multiphase mixture of fuel, free-oxygen containing gas, and temperature moderator directly into the reaction zone.

A three or four stream annular-type burner, such as shown and described in coassigned U.S. Patent Nos. 3,847,564 and 4,525,175, which are incorporated herein by reference, is preferably used to introduce the feedstreams into the partial oxidation gas generator. Other suitable burner designs may be used. For example, with respect to U.S. Patent No. 3,847,564, free-oxygen containing gas may be simultaneously passed through the central conduit 18 and outer annular passage 14 of said burner. The free-oxygen containing gas is selected from the group consisting of substantially pure oxygen i.e. greater than 95 mole percent O₂, oxygen enriched air i.e. greater than 21 mole percent O₂, and air. The free-oxygen containing gas is supplied at a temperature in the range of about 37.7 to 538°C (100°F to 1000°). The aqueous slurry of pretreated sewage sludge and solid carbonaceous fuel e.g. coal and/or petroleum coke is passed through the intermediate annular passage 16 at a temperature in the range of about ambient to 343°C (650°F).

In the partial oxidation process, the weight ratio of H₂O to carbon in the feed is in the range of about 0.2 to 3.0, such as about 1.0 to 2.0. The atomic ratio of free-oxygen to carbon in the feed is in the range of about 0.85 to 1.5, such as about 1.0 to 1.2. Advantageously, the high amount of combined oxygen in the sewage sludge reduces the amount of free-oxygen.

The relative proportions of solid fuels, sewage sludge, water and oxygen in the feedstreams to the partial oxidation gas generator are carefully regulated to convert a substantial portion of the carbon in the fuel e.g., up to about 90% or more by weight, to carbon oxides; and to maintain an autogenous reaction zone temperature in the range of about 982.2°C to 1926.6°C (1800°F to 3500°F). The pressure is in the range of about 1x10⁵ Pa-304x10⁵ Pa (1-300 atmospheres). Preferably the temperature in the gasifier is in the range of about 1204.4°C to 1537.8°C (2200°F to 2800°F), so that molten slag is produced.

The dwell time in the reaction zone is in the range of about 1 to 10 seconds, and preferably in the range of about 2 to 8 seconds. With substantially pure oxygen feed to the partial oxidation gas generator, the composition of the effluent gas from the gas generator in mole percent dry basis may be as follows: H₂ 10 to 60, CO 20 to 60, CO₂ 5 to 40, CH₄ 0.01 to 5, H₂S+COS 0 to 5, N₂ nil to 5, and Ar nil to 1.5. With air feed to the gas generator, the composition of the generator effluent gas in mole percent dry basis may be about as follows: H₂ 2 to 20, CO 5 to 35, CO₂ 5 to 25, CH₄ 0 to 2, H₂S+COS 0 to 3, N₂ 45 to 80, and Ar 0.5 to 1.5. Unconverted carbon, ash, or molten slag are contained in the effluent gas stream. Depending on the composition and use, the effluent gas stream from the partial oxidation gasifier is called synthesis gas, reducing gas, or fuel gas. Coal has a high ash content e.g. about 10 to 30 wt.%. Advantageously, when coal is used as the supplemental fuel the coal ash will encapsulate the non-combustible materials in the sewage sludge, and the encapsulated material will flow from the reaction zone of the gas generator as substantially inert non-contaminating ash and molten slag.

The hot gaseous effluent stream from the reaction zone of the synthesis gas generator is quickly cooled below the reaction temperature to a temperature in the range of about 162.8°C to 287.8°C (325°F to 550°F) by direct quenching in water, or by indirect heat exchange for example with boiler feed water to produce steam in a gas cooler. Optionally, a portion of said steam or hot synthesis gas may be used in direct or indirect heat exchange to heat the dewatered slurry of sewage sludge in step (3) of Claim 1 of the process. The gas stream from the partial oxidation gasifier or the flue gas from the furnace, boiler, or incinerator may be cleaned and purified by conventional methods. For example, reference is made to coassigned U.S. Patent No. 4,052,176, which is included herein by reference for removal of H₂S, COS, and CO₂. Fly-ash and slag may be removed by quenching the process gas stream in a conventional quench tank and/or by scrubbing. See coassigned U.S. Patent Numbers 3,232,728; 3,524,630; and 4,801,307, which are incorporated herein by reference.

In a preferred embodiment according to a second aspect of the present invention, an aqueous slurry of sewage sludge having a solids content in the range of about 0.5 to 20 wt.% is mixed or ground with particles of low grade solid carbonaceous fuel to produce a pumpable aqueous slurry of sewage sludge and low grade solid carbonaceous fuel. By definition, low grade solid carbonaceous fuel is a material selected from the group consisting of low rank coal, peat, wood, other cellulose- containing materials, residue derived from coal liquefaction, shale, asphalt, and mixtures thereof. The low grade solid carbonaceous fuel has a higher heating value (HHV) in the range of about 11.63 MJ/Kg to 26.7 MJ/Kg (5000 to 11,500 BTU/Lb). The term low rank coal, as used herein, pertains to Class III subbituminous and Class IV Lignitic fuel, as shown in Table I of ASTM D388. The low grade solid carbonaceous fuel is ground by conventional means to a particle size so that 100 wt.% passes through ASTM E11 Standard Sieve Designation 1040 mm, such as about 425 um Alternative No. 40. For example, the low grade solid carbonaceous fuel may comprise about 30 to 50 wt.% of the total solids in this slurry and the remainder of the solids substantially comprising sewage sludge. This slurry is then concentrated by a conventional continuous belt filter press to produce a slurry of dewatered sewage sludge and low grade solid carbonaceous fuel having a total solids content in the range of about 35 to 55 wt.%, such as about 30 to 40 wt.%, say 35 wt.%.

It was unexpectedly found that the morphology of sewage sludge is changed by said mechanical treatment of the sewage sludge. For example, bound water is released and slurry making is optimized. Slurries containing a higher concentration of solids can be achieved by means of such mechanical dewatering equipment. By means of conventional continuous belt pressure filters, the aqueous slurry of sewage sludge and preferably, the aqueous slurry of sewage sludge and low grade solid carbonaceous fuel is pressed between two moving belts that pass between and over rollers. A surface pressure in the range of about 138 KPa to 1379 KPa (20 to 200 pounds per square inch (psi)) for a period in the range of about 1/2 to 60 minutes, such as about 1 to 30 minutes, say about 3 minutes, and at a temperature in the range of about ambient to 148.9°C (300°F), say about 100°C to 140.6°C (212°F to 285°F), is applied to the aqueous slurry of sewage sludge and low grade solid carbonaceous fuel. Liquid water is thereby quickly pressed from the material between the belts. For example, the Andritz Co. Continuous Press Filter (CPF) operating at ambient conditions with a surface pressure of about 138 KPa (20 psi) will produce a press cake having a solids content in the range of about 20 to 50 wt.%. Optionally, on discharge from the CPF, the press cake may be optionally further dewatered in a conventional Andritz Co. High Intensity Press (HIP) continuous belt filter press operating with a surface pressure in the range of 689.5 KPa to 1724 KPa (about 100 to 250 psi) for a period in the range of about 1/2 to 60 minutes, such as about 1-30 minutes, say about 3 minutes, and at a temperature in the range of about ambient to 148.9°C (300°F), say about 100°C to 140.6°C (212°F to 285°F) to produce press cake having a solids content in the range of about 25 to 55 wt.%. Particles of low grade solid carbonaceous fuel may be mixed with the dewatered slurry of sewage sludge before or after the pressing(s) which take place in the first belt filter press and/or in the High Intensity Press (HIP) belt filter press. If further dewatering is required, prior to filtering in the HIP, the press cake from the CPF is mixed with a conventional inorganic filter additive e.g. compounds of iron, calcium, silicon, and mixtures thereof in the amount of about 5-30 wt.% of the total solids and having a particle size of less than about 2 mm, such as about 1 mm. A typical filter-aid is CaCO₃. Pressing may take place with or without steam. The solids content of the press cake from the HIP may be thereby increased to about 35 to 65 wt.%.

In one embodiment the sewage sludge is concentrated by a combination of continuous belt pressure filtering and centrifuging. For example, particles of low grade solid carbonaceous fuel are mixed with the sewage sludge prior to the first concentrating step (a) in the first belt filter press. Then, additional dewatering is provided by heating the slurry of sewage sludge and low grade solid carbonaceous fuel to a temperature in the range of about 100°C to 140.6°C (212°F to 285°F) during the centrifuging that follows the concentrating step in the first belt filter press.

In another embodiment, the concentrating of the slurry of sewage sludge comprising about 0.5 to 20 wt.% solids as previously described in the CPF and/or HIP is done only on the slurry of sewage sludge. The press cake leaving the first belt filter press and/or the second high intensity belt filter press (HIP) is then mixed with the low grade solid carbonaceous fuel prior to next step in the process e.g. heat treating.

Preferably, the aforesaid belt filter pressing takes place before any significant bacterial action occurs that consumes carbon and organic materials in the sewage sludge.

Heat treating of the highly dewatered slurry of sewage sludge and low grade solid carbonaceous fuel preferably takes place in conventional double tube heat exchangers, spiral heat exchangers, or shell and tube heat exchangers. The highly dewatered sewage sludge is treated at a temperature in the range of about 48.9°C to 371.1°C (120°F to 700°F) in the absence of air and at a pressure which is at or above the vapor pressure of water at the heat treating temperature. For example, the sewage sludge is heated in double-tube heat exchangers in the following two consecutive stages: (a) heating at a temperature in the range of about 48.9°C to 162.8°C (120°F to 325°F) in the absence of air for a residence time of about 1 to 10 minutes and with a pressure difference from inlet to outlet of said stage in the range of about 2068.5 KPa to 3792 KPa (300 to 550 pounds per square inch (psi)); (b) followed by heating at a temperature in the range of about 204.4°C to 371.1°C (400°F to 700°F) in the absence of air for a residence time of about 2 to 20 minutes and with a pressure difference from inlet to outlet of less than about 689.5 KPa (100 pounds per square inch). The hydrothermally treated sewage sludge is held at a temperature in the range of about 246.1°C 371.1°C (475°F to 700°F) in the absence of air for a residence time of about 3 to 90 minutes and at a pressure which is at or above the vapor pressure of water at said holding temperature to produce a pumpable aqueous slurry of sewage sludge and low grade solid carbonaceous fuel having a viscosity of less than about 700 centipoise when measured at about 82°C (180°F). Thus, the dewatered sewage sludge in admixture with low grade solid carbonaceous fuel may be heated by direct or indirect heat exchange in an autoclave. For example, steam or partially cooled synthesis gas produced downstream in the partial oxidation process may be passed in direct or indirect heat exchange with the slurry of sewage sludge and low grade solid carbonaceous fuel. Hydrothermally treating and holding the dewatered sewa e sludge at a temperature in the range of about 246.1°C to 371.1°C (475°F to 700°F) as previously described causes decarboxylation and dehydrogenation of the sewage sludge. The sewage sludge fibers and gel structure break down . It was unexpectedly found that the higher heating value (HHV) of the low grade carbonaceous fuel is upgraded about 10 to 20% by the hydrothermal treatment. Sewage sludge with a particle size in the range of about 5 to 20 microns is thereby produced. Pumpable aqueous slurries of sewage sludge and low grade solid carbonaceous fuel with highly pumpable characteristics are thereby produced. Off-gas from the hydrothermal reactor e.g. autoclave, comprising CO₂, H₂O, H₂S and COS is sent to a conventional odor control unit and/or disinfecting zone. Noxious gases are thereby safely disposed of without polluting the nation's environment.

In one embodiment, hot water at a temperature in the range of about 148.9°C to 260°C (300°F to 500°F) may be removed from the bottom of the hydrothermal reactor and may be used in indirect heat exchange with the slurry of sewage sludge and low grade solid carbonaceous fuel going to the hydrothermal reactor. In another embodiment, at least a portion of the fuel gas produced by the subject partial oxidation mode is used to provide the thermal energy in the aforesaid heat treating step.

Excess water is separated from the heat treated and dewatered slurry of sewage sludge and low grade solid carbonaceous fuel by (a) flash evaporization, and/or (b) cooling the slurry of sewage sludge and low grade solid carbonaceous fuel to a temperature in the range of about ambient to 73.9°C (165°F) followed by centrifuging in a conventional centrifuge.

The pumpable aqueous slurry from the reactor is introduced into a flash evaporation zone where the pressure is reduced to a pressure in the range of about atmospheric pressure to the saturated vapor pressure of water at the temperature in flash evaporization zone in the range of about 93.3°C to 204.4°C (200°F to 400°F). Sufficient water is thereby evaporated and separated from the slurry of sewage sludge and low grade solid carbonaceous fuel in the flash evaporation zone to provide a pumpable slurry of dewatered sewage sludge and low grade solid carbonaceous fuel having a solids content in the range of about 45 to 70 wt.%. The higher heating value (HHV) of this dewatered slurry of sewage sludge and low grade solid carbonaceous fuel is in the range of about 13.9 MJ/Kg-27.9 MJ/Kg (6,000 to 12,000 BTU/Lb), say about 15.1 MJ/Kg (6,500 BTU/Lb). All of the higher heating values expressed herein are on the dry basis for the materials.

Optionally, the flash evaporation step may be proceeded or followed by a conventional centrifuging step to remove some of the water e.g. about 1 to 15 wt.%. In still another embodiment, the flash evaporation step is replaced by the steps of cooling the heated pumpable aqueous slurry from the autoclave to a temperature in the range of about ambient to 200°F, and separating water e.g. about 1 to 15 wt.% from the sewage sludge by means of a conventional centrifuge. A pumpable slurry of dewatered sewage sludge and low grade solid carbonaceous fuel is thereby provided having a solids content in the range of about 45 to 70 wt.%. The higher heating value (HHV) of this dewatered sewage sludge is in the range of about 13.9 MJ/Kg to 27.9 MJ/Kg (6,000 to 12,000 BTU/Lb), say about 15.1 MJ/Kg (6,500 BTU Lb).

After said dewatering step by flash evaporization and/or cooling the heat treated dewatered slurry of sewage sludge and low grade solid carbonaceous fuel is sheared. Shearing is a very effective way to improve the slurrying characteristics and solids content of dewatered sewage sludge. More extensive shearing of sewage sludge is treated in coassigned U.S. Patent Numbers 4,933,086 and 4,983,296, which are incorporated herein by reference.

Shearing may take place in a conventional steam jacketed mixing tank equipped with a high speed propeller. Accordingly, the aqueous slurry of dewatered sewage sludge and low grade solid carbonaceous fuel having a solids content in the range of about 45 to 70 wt.% may be sheared at a temperature in the range of about ambient to 100°C (212°F), such as about 65.6°C to 98.9°C (150°F to 210°F), say about 200°F in the absence of air in a steam jacketed tank for a sufficient period e.g. about 10 seconds to 120 minutes to produce a pumpable homogeneous slurry comprising about 3-7 parts by wt. of sewage sludge to 3-7 parts by wt. of low grade solid carbonaceous fuel and having a viscosity in the range of less than about 2 PaS (2000 centipoise), say 0.4 to 2 PaS (400 to 2000 centipoise) when measured at about 82.2°C (180°F). The propeller rotates at a speed of about 0.5 to 360 rpm thereby providing a shear rate in the range of about 0.5 to 360 seconds⁻¹.

Alternatively, the dewatered aqueous slurry of sewage sludge and low grade solid carbonaceous fuel having a solids content of about 45 to 70 wt.%, may be simultaneously heated and intensely sheared at a temperature in the range of about ambient to 100°C (212°F) such as about 65.6°C to 98.9°C (150°F to 210°F), such as about 93.3°C (200°) in the absence of air for a period in the range of about 10 seconds to 120 minutes, such as about 10 seconds to 20 minutes in a conventional continuous mixing and shearing means comprising one or two parallel rotatable shafts with each shaft containing a plurality e.g. about 6 to 30 agitators or mixing paddles or blades. One embodiment has two parallel shafts of agitators which rotate in the same direction at a speed of about 50 to 600 rpm within a steam jacketed chamber that conforms closely to the shape of the agitator assembly thereby providing a close clearance e.g. about .030" to 0.060" between the agitators and the inside wall of said chamber. A most effective mixing, shearing and self-cleaning action is thereby provided as the material is moved from the inlet end of the preferably horizontal chamber to the opposite discharge end. See U.S. Patent No. 3,823,921, which is incorporated hereby by reference. For example, a suitable continuous processor is made by Teledyne Readco of York, Pennsylvania. The flow rate of material through this continuous processor is in the range of about 0.37-4.5 Kg/s (50 to 600 Lbs per minute). The rate of shear is about 20 to 500 sec⁻¹, such as about 100 to 300 sec⁻¹ . The particle size is in the range of about 1 to 1000 micrometres, such as about 20 to 200 micrometres. A homogeneous pumpable slurry comprising about 3-7 parts by wt. of sewage sludge to 3-7 parts by wt. of low grade solid carbonaceous fuel and having a solids content in the range of about 45 to 70 wt.% and a viscosity of less than about 2 PaS (2000 centipoise) when measured at 82.2°C (180°F), such as less than about 1500 centipoise when measured at 82.2°C (180°F), is thereby produced.

In one embodiment, an additive ethoxylated nonylphenol at a concentration of about 0.1 to 5 wt.% of the slurry is introduced into the shearing means to enhance pumpability of the aqueous slurry of sewage sludge and coal.

The pumpable slurry leaving the shearing zone is burned in a partial oxidation gasifier, furnace, boiler, or incinerator to produce an effluent gas stream. In one embodiment, the effluent gas stream is washed and purified. Non-polluting ash and noxious gases are removed by conventional means. Contamination of the environment is prevented.

In a preferred embodiment, the fuel feedstream, for example the aqueous slurry of sewage sludge and low grade solid carbonaceous fuel and a stream of free-oxygen containing gas are introduced by means of a burner into a free-flow unobstructed down-flowing vertical refractory lined steel wall pressure vessel where the partial oxidation reaction takes place. A typical gas generator is shown and described in coassigned U.S. Patent No. 3,544,291, which is incorporated herein by reference. The burner assembly is inserted downward through a top inlet port of the non-catalytic synthesis gas generator. The burner extends along the central longitudinal axis of the gas generator with the downstream end discharging a multiphase mixture of fuel, free-oxygen containing gas, and temperature moderator directly into the reaction zone.

A three or four stream annular-type burner, such as shown and described in coassigned U.S. Patent Nos. 3,847,564 and 4,525,175, which are incorporated herein by reference, is preferably used to introduce the feedstreams into the partial oxidation gas generator. Other suitable burner designs may be used. For example, with respect to U.S. Patent No. 3,847,564, free-oxygen containing gas may be simultaneously passed through the central conduit 18 and outer annular passage 14 of said burner. The free-oxygen containing gas is selected from the group consisting of substantially pure oxygen i.e. greater than 95 mole percent O₂, oxygen enriched air i.e. greater than 21 mole percent O₂, and air. The free-oxygen containing gas is supplied at a temperature in the range of about 37.8°C (100°F) to 537.8°C (1000°). The aqueous slurry of pretreated sewage sludge and low grade solid carbonaceous fuel e.g. coal is passed through the intermediate annular passage 16 at a temperature in the range of about ambient to 343.3°C (650°F).

In the partial oxidation process, the weight ratio of H₂O to carbon in the feed is in the range of about 0.2 to 3.0, such as about 1.0 to 2.0. The atomic ratio of free-oxygen to carbon in the feed is in the range of about 0.85 to 1.5, such as about 1.0 to 1.2. Advantageously, the high amount of combined oxygen in the sewage sludge reduces the amount of free-oxygen.

The relative proportions of solid fuels, sewage sludge, water and oxygen in the feedstreams to the partial oxidation gas generator are carefully regulated to convert a substantial portion of the carbon in the fuel e.g., up to about 90% or more by weight, to carbon oxides; and to maintain an autogenous reaction zone temperature in the range of about 982.2°C to 1926.6°C (1800°F to 3500°F). The pressure is in the range of about 1x10⁵ Pa to 304x10⁵ Pa (1-300 atmospheres). Preferably the temperature in the gasifier is in the range of about 1204.4°C to 1537.8°C (2200°F to 2800°F), so that molten slag is produced.

The dwell time in the reaction zone is in the range of about 1 to 10 seconds, and preferably in the range of about 2 to 8 seconds. With substantially pure oxygen feed to the partial oxidation gas generator, the composition of the effluent gas from the gas generator in mole percent dry basis may be as follows: H₂ 10 to 60, CO 20 to 60, CO₂ 5 to 40, CH₄ 0.01 to 5, H₂S+COS 0 to 5, N₂ nil to 5, and Ar nil to 1.5. With air feed to the gas generator, the composition of the generator effluent gas in mole percent dry basis may be about as follows: H₂ 2 to 20, CO 5 to 35, CO₂ 5 to 25, CH₄ 0 to 2, H₂S+COS 0 to 3, N₂ 45 to 80, and Ar 0.5 to 1.5. Unconverted carbon, ash, or molten slag are contained in the effluent gas stream. Depending on the composition and use, the effluent gas stream from the partial oxidation gasifier is called synthesis gas, reducing gas, or fuel gas. Coal has a high ash content e.g. about 10 to 30 wt.%. Advantageously, when coal is used as the supplemental fuel the coal ash will encapsulate the non-combustible materials in the sewage sludge, and the encapsulated material will flow from the reaction zone of the gas generator as substantially inert non-contaminating ash and molten slag.

The hot gaseous effluent stream from the reaction zone of the synthesis gas generator is quickly cooled below the reaction temperature to a temperature in the range of about 121°C to 371°C (250°F to 700°F) by direct quenching in water, or by indirect heat exchange for example with water to produce steam in a gas cooler. The gas stream from the partial oxidation gasifier or the flue gas from the furnace, boiler, or incinerator may be cleaned and purified by conventional methods. For example, reference is made to coassigned U.S. Patent No. 4,052,176, which is included herein by reference for removal of H₂S, COS, and CO₂. Fly-ash and slag maybe removed by quenching the process gas stream in a conventional quench tank and/or by scrubbing. See coassigned U.S. Patent Numbers 3,232,728; 3,524,630; and 4,801,307, which are incorporated herein by reference.

Although modifications and variations of the invention may be made without departing from the scope thereof, only such limitations should be imposed as are indicated in the appended claims.

## Claims

1. A process for producing a slurry of sewage sludge suitable for burning in a partial oxidation gasifier, furnace, boiler or incinerator, comprising:
(1) concentrating an aqueous slurry of sewage sludge having a solids content in the range of about 0.5 to 20 wt. % by removing water therefrom (i) by means of a centrifuge, or (ii) by means of (a) a first belt filter press whereby said slurry of sewage sludge is carried on a continuous belt and a surface pressure in the range of 137.9 KPa to 689.5 KPa (20 to 100 psi) is applied to said sewage sludge at a temperature in the range of ambient to 148.9°C (300°F) for a period in the range of 1/2 to 60 minutes; and (b) with or without additional pressing of the material from the first belt filter press in (a) in a high intensity continuous belt filter press operating with a surface pressure in the range 689.5 KPa to 1.72 MPa (100 to 250 psi) for a period in the range of 1/2 to 60 minutes, such as 1 to 30 minutes, and at a temperature in the range of ambient to 148.9°C (300°F) to produce a dewatered slurry of sewage sludge having a total solids content in the range of 10-55 wt. %.
(2) pumping by means of a positive displacement pump said dewatered slurry of sewage sludge from (1) into a hydrothermal treating reactor wherein by said pumping the viscosity of said dewatered slurry is reduced to less than 60 Pas (6000 centipoise) when measured at 82.2°C (180°F);
(3) heat treating said dewatered slurry of sewage sludge from (2) in said hydrothermal treating zone in the absence of air and at a temperature in the range of 48.9°C (120°F) to 371.1°C (700°F) and at a pressure which is at or above the vapor pressure of water at said heat treating temperature in the following two stages; (a) heating at a temperature in the range of 48.9°C to 162.8°C (120°F to 325°F) in the absence of air for a residence time of 1 to 10 minutes; followed by (b) heating at a temperature in the range of 162.8°C to 371.1°C (325°F to 700°F) in the absence of air for a residence time of 2 to 20 minutes;
(4) holding the heated sewage sludge from (3) at a temperature in the range of 232.2°C to 371.1°C (450°F to 700°F) in the absence of air for a residence time in the range of 2 to 120 minutes and at a pressure which is at or above the vapor pressure of water at said holding temperature, to produce a pumpable aqueous slurry of sewage sludge having a viscosity of less than 0.7 Pas (700 centipoise) when measured at 82.2°C (180°F);
(5) cooling the heat treated slurry of sewage sludge from (4) to a temperature in the range of ambient to less than 93.3°C (200°F); thereby providing a highly pumpable aqueous slurry of dewatered sewage sludge having a solids content in the range of 10 to 55 wt. % and a higher heating value (HHV) in the range of 13.9 MJ/Kg to 18.6 MJ/Kg (6,000 to 8,000 BTU/LB)
(6) shearing the slurry of sewage sludge from (4) in a shearing means at a temperature in the range of ambient to 100°C (212°F) in the absence of air for a period in the range of 10 seconds to 180 minutes to produce a sheared highly pumpable fluid sewage sludge having a viscosity in the range of 0.05 Pas to 2 Pas (50 centipoise to 2000 centipoise) when measured at 82.2°C (180°F); and
(7) mixing or grinding solid carbonaceous fuel with the slurry of sewage sludge either prior to and/or after said concentrating step (a) and/or (b) of step (1), or after said shearing at step (6).

2. A process according to claim 1 wherein in step (2) the viscosity of said dewatered slurry is reduced to less than 5 Pas (5,000 centipoise) when measured at 82.2°C (180°F);
and wherein in step (3) the heat treatment is at a temperature in the range of 48.9°C to 287.8°C (120°F to 550°F) and at a pressure which is set at or above the vapor pressure of water at said heat treating temperature in the following two stages; (a) heating at a temperature in the range of 48.9°C to 162.8°C (120°F to 325°F) in the absence of air for a residence time of 1 to 10 minutes; followed by (b) heating at a temperature in the range of 162.8°C to 287.8°C (325°F to 550°F) in the absence of air for a residence time of 2 to 20 minutes
and wherein in step (4) the sewage sludge is held at a temperature in the range of 232.2°C to 287.8°C (450°F to 550°F) and produces a pumpable aqueous slurry of sewage sludge having a viscosity of less than 6 Pas (600 centipoise) when measured at about 82.2°C (180°F);
and wherein in step (6) the sheared highly pumpable fluid sewage sludge has a viscosity in the range of 0.05 Pas to 0.6 Pas (50 centipoise to 600 centipoise) when measured at 82.2°C
and wherein step (7) comprises grinding together the sheared sewage sludge from (6) with a solid carbonaceous fuel in a grinding means thereby producing a pumpable slurry of sewage sludge and solid carbonaceous fuel having a solids content in the range of 45 to 70 wt. %, a wt. ratio in the range of 3 - 7 parts by wt. of sewage sludge to 3 - 7 parts by wt. of solid carbonaceous fuel and a viscosity of less than 2 Pas (2000 centipoise) when measured at 82.2°C (180°F).

3. A process according to claim 1 or claim 2 for disposing of sewage sludge further comprising:
(8) burning said pumpable slurry of sewage sludge and solid carbonaceous fuel from (7) in a partial oxidation gasifier, furnace, boiler or incinerator to produce a hot raw effluent gas stream.

4. A process according to any one of claims 1 - 3 wherein said concentrating in (1) take place before any significant bacterial action occurs that consumes carbon and organic materials in said sewage sludge.

5. A process according to any one of claims 1 - 4 wherein water at a temperature in the range of 148.9°C to 260°C (300°F to 500°F) is produced in the reaction zone of (3), and said water is separated from the sewage sludge and passed in indirect heat exchange with the slurry of sewage sludge going into said hydrothermal treating zone.

6. A process according to claim 1 or claim 2 further comprising:
(9) introducing said pumpable slurry of sewage sludge and solid carbonaceous fuel from (8) into the reaction zone of a partial oxidation gas generator by way of one passage of a multi-passage burner while simultaneously passing through at least one other passage of said burner a stream of free-oxygen containing gas; and
(10) reacting said materials in said partial oxidation reaction zone in (9) at a temperature in the range of 982.2°C to 1926.6°C (1800°F to 3500°F) and at a pressure in the range of 101.3 KPa - 30.4 MPa (1-300 atmospheres) to produce a hot raw effluent gas stream comprising at least one of the following: synthesis gas, reducing gas and fuel gas.

7. A process according to any one of claims 1 - 6 wherein additional dewatering is provided by pressing said sewage sludge in (1) (a) and/or (b) while in admixture with a filter-aid having a particle size of less than about 2 mm, and with or without steam.

8. A process according to any one of claims 1 - 7 wherein the heat treating of the sewage sludge in (3) takes place in an autoclave while said sewage sludge is in direct or indirect heat exchange with steam or synthesis gas produced downstream in the process.

9. A process according to claim 1 wherein in (1) prior to and/or after said concentrating step (a) and/or (b) particles of low grade solid carbonaceous fuel are mixed or ground with the slurry of sewage sludge; and wherein a dewatered slurry of sewage sludge and low grade solid carbonaceous fuel is produced having a total solids content in the range of 35 to 55 wt. % and comprising 30 to 50 wt. % of low grade solid carbonaceous fuel and the remainder of the solids substantially comprising sewage sludge;
wherein in (3) heat treating said dewatered slurry of sewage sludge and low grade solid carbonaceous fuel from (1) in a hydrothermal reaction zone in the absence of air, at a temperature in the range of 93.3°C to 371.1°C (200°F to 700°F), and at a pressure which is at or above the vapor pressure of water at the heat treating temperature, in the following two stages; (a) heating at a temperature in the range of 48.9°C to 162.8°C (120°F to 325°F) in the absence of air for a residence time of 1 to 10 minutes; (b) followed by heating at a temperature in the range of about 204.4°C to 371.1°C (400°F to 700°F) in the absence of air for a residence time of 5 to 120 minutes;
wherein in (4) holding the heated slurry of sewage sludge and low grade solid carbonaceous fuel from (3) at a temperature in the range of 246.1°C to 371.1° (475°F to 700°F) in the absence of air for a residence time of 3 to 90 minutes and at a pressure which is at or above the vapor pressure of water at said holding temperature, to produce a pumpable aqueous slurry of sewage sludge and low grade solid carbonaceous fuel having a viscosity of less than 0.7 Pas (700 centipoise) when measured at 82.2°C (180°F).
(5) separating excess water from the heat treated and dewatered slurry of sewage sludge and low grade solid carbonaceous fuel from (4) by (a) reducing the pressure and corresponding temperature of the heat treated dewatered slurry of sewage sludge and low grade solid carbonaceous fuel from (4) in a flash evaporization zone to a pressure in the range of about atmospheric pressure to the saturated vapor pressure of water at the temperature in said flash evaporization zone in the range of 93.3°C to 204.4°C (200°F to 400°F), thereby evaporating and separating water from said slurry, and/or (b) cooling the slurry of sewage sludge and low grade solid carbonaceous fuel to a temperature in the range of ambient to 73.9°C (165°F) followed by centrifuging; thereby providing a pumpable aqueous slurry of dewatered sewage sludge and low grade solid carbonaceous fuel having a solids content in the range of 45 to 70 wt. % and having a higher heating value (HHV) in the range of 13.9 MJ/Kg to 27.9 MJ/Kg (6,000 to 12,000 BTU/LB); and
(6) shearing the slurry of sewage sludge and low grade solid carbonaceous fuel from (5) in a shearing means at a temperature in the range of ambient to 100°C (212°F) in the absence of air for a period in the range of 10 seconds and 120 minutes thereby producing a pumpable slurry of sewage sludge and low grade solid carbonaceous fuel having a solids content in the range of 45 to 70 wt. %, a wt. ratio in the range of 3 - 7 parts by wt. of sewage sludge to 3 - 7 parts by wt. of low grade solid carbonaceous fuel; and a viscosity of less than 2 Pas (2000 centipoise) when measured at 82.2°C (180°F).

10. A process according to claim 1 or claim 9 for disposing of sewage sludge further comprising the additional step of burning said pumpable slurry of sewage sludge and low grade solid carbonaceous fuel from (6) in a partial oxidation gasifier, furnace, boiler or incinerator to produce a hot raw effluent gas stream.

11. A process according to any one of claims 1, 9 and 10 wherein said shearing means in (6) comprises a steam jacketed chamber containing one or two parallel rotatable shafts with each shaft containing a plurality of agitators or mixing paddles which rotate at a speed of 50 to 600 rpm thereby moving the material from the inlet end of the horizontal chamber to the opposite discharge end.

12. A process according to any one of claims 1, 10 - 11 wherein the additive ethoxylated nonylphenol is introduced into said shearing means in (6) in the amount of 0.1 to 5 wt. % of the slurry to enhance the pumpability of the aqueous slurry of sewage sludge and low grade solid carbonaceous fuel.

13. A process according to any one of claims 1, 10 - 12 wherein the heat treating of the sewage sludge in (3) takes place in an autoclave while said sewage sludge is in direct or indirect heat exchange with steam produced downstream in the process.

## Patentansprüche

1. Ein Verfahren zur Herstellung einer Aufschlämmung von Klärschlamm, die zur Verbrennung in einem Vergaser mit partieller Oxidation, einem Ofen, einem Kessel oder einem Veraschungsofen geeignet ist, welches umfaßt:
(1) Konzentrieren einer wäßrigen Aufschlämmung von Klärschlamm mit einem Feststoffgehalt im Bereich von etwa 0,5 bis 20 Gew.-% durch Entfernung von Wasser daraus (i) mittels einer Zentrifuge oder (ii) mittels (a) einer ersten Bandfilterpresse, wodurch besagte Aufschlämmung von Klärschlamm auf einem kontinuierlichen Band gefördert wird und ein Oberflächendruck im Bereich von 137,9 kPa bis 689,5 kPa (20 bis 100 psi) auf besagten Klärschlamm bei einer Temperatur im Bereich von Umgebungstemperatur bis 148,9°C (300°F) für einen Zeitraum im Bereich von 1/2 bis 60 Minuten ausgeübt wird; und (b) mit oder ohne zusätzliche Pressung des Materials aus der ersten Bandfilterpresse in (a) in einer kontinuierlichen Hochleistungs-Bandfilterpresse, die mit einem Oberflächendruck im Bereich von 689,5 kPa bis 1,72 MPa (100 bis 250 psi) für einen Zeitraum im Bereich von 1/2 bis 60 Minuten, wie etwa 1 bis 30 Minuten, und bei einer Temperatur im Bereich von Umgebungstemperatur bis 148,9°C (300°F) arbeitet, um eine entwässerte Aufschlämmung von Klärschlamm mit einem Feststoffgehalt im Bereich von 10-55 Gew.-% zu erzeugen;
(2) Pumpen besagter entwässerten Aufschlämmung von Klärschlamm aus (1) mittels einer Verdrängungspumpe in einen Hydrothermalbehandlungsreaktor, wobei durch besagtes Pumpen die Viskosität besagter entwässerten Aufschlammung auf weniger als 60 Pas (6000 Centipoise), wenn gemessen bei 82,2°C (180°F), verringert wird;
(3) Wärmebehandlung besagter entwässerten Aufschlämmung von Klärschlamm aus (2) in besagter Hydrothermalbehandlungszone in der Abwesenheit von Luft und bei einer Temperatur im Bereich von 48,9°C (120°F) bis 371,1°C (700°F) und bei einem Druck, der bei oder über dem Dampfdruck von Wasser bei besagter Wärmebehandlungstemperatur in den folgenden zwei Stufen liegt; (a) Erhitzen bei einer Temperatur im Bereich von 48,9° bis 162,8°C (120°F bis 325°F) in der Abwesenheit von Luft für eine Verweilzeit von 1 bis 10 Minuten; gefolgt von (b) Erhitzen bei einer Temperatur im Bereich von 162,8°C bis 371,1°C (325°F bis 700°F) in der Abwesenheit von Luft für eine Verweilzeit von 2 bis 20 Minuten;
(4) Halten des erwärmten Klärschlamms aus (3) bei einer Temperatur im Bereich von 232,2°C bis 371,1°C (450°F bis 700°F) in der Abwesenheit von Luft für eine Verweilzeit im Bereich von 2 bis 120 Minuten und bei einem Druck der bei oder über dem Dampfdruck von Wasser bei besagter Haltetemperatur liegt, um eine pumpbare wäßrige Aufschlämmung von Klärschlamm mit einer Viskosität von weniger als 0,7 Pas (700 Centipoise), wenn gemessen bei 82,2°C (180°F) , zu erzeugen;
(5) Abkühlen der wärmebehandelten Aufschlammung von Klärschlamm aus (4) auf eine Temperatur im Bereich von Umgebungstemperatur bis weniger als 93,3°C (200°F) ; wodurch eine in hohem Maße pumpbare wäßrige Aufschlämmung von entwässertem Klärschlamm mit einem Feststoffgehalt im Bereich von 10 bis 55 Gew.-% und einem spezifischen Brennwert (HHV) im Bereich von 13,9 MJ/kg bis 18,6 MJ/kg (6000 bis 8000 BTU/LB) bereitgestellt wird;
(6) Scheren der Aufschlämmung von Klärschlamm aus (4) in einer Schereinheit bei einer Temperatur im Bereich von Umgebungstemperatur bis 100°C (212°F) in der Abwesenheit von Luft für einen Zeitraum im Bereich von 10 Sekunden bis 180 Minuten, um einen gescherten in hohem Maße pumpbaren fließfähigen Klärschlamm mit einer Viskosität im Bereich von 0,05 Pas bis 2 Pas (50 Centipoise bis 2000 Centipoise), wenn gemessen bei 82,2°C (180°F), zu erzeugen; und
(7) Vermischen oder Vermahlen von festem kohlenstoffhaltigen Brennstoff mit der Aufschlammung von Klärschlamm entweder vor und/oder nach besagtem Konzentrationsschritt (a) und/oder (b) von Schritt (1) oder nach besagtem Scheren in Schritt (6).

2. Ein Verfahren nach Anspruch 1, wobei in Schritt (2) die Viskosität besagter entwässerten Aufschlämmung auf weniger als 5 Pas (5000 Centipoise), wenn gemessen bei 82,2°C (180°F), verringert wird;
und wobei in Schritt (3) die Wärmebehandlung bei einer Temperatur im Bereich von 48,9°C bis 287,8°C (120°F bis 550°F) und bei einem Druck erfolgt, der bei oder über dem Dampfdruck von Wasser bei besagter Wärmebehandlungstemperatur in den folgenden zwei Stufen eingestellt ist; (a) Erhitzen bei einer Temperatur im Bereich von 48,9°C bis 162,8°C (120°F bis 325°F) in der Abwesenheit von Luft für eine Verweilzeit von 1 bis 10 Minuten; gefolgt von (b) Erhitzen bei einer Temperatur im Bereich von 162,8°C bis 287,8°C (325°F bis 550°F) in der Abwesenheit von Luft für eine Verweilzeit von 2 bis 20 Minuten;
und wobei in Schritt (4) der Klärschlamm bei einer Temperatur im Bereich von 232,2°C bis 287,8°C (450°F bis 550°F) gehalten wird und eine pumpbare wäßrige Aufschlämmung von Klärschlamm mit einer Viskosität von weniger als 6 Pas (600 Centipoise), wenn gemessen bei etwa 82,2°C (180°F), erzeugt;
und wobei in Schritt (6) der gescherte in hohem Maße pumpbare fließfähige Klärschlamm eine Viskosität im Bereich von 0,05 Pas bis 0,6 Pas (50 Centipoise bis 600 Centipoise) wenn gemessen bei 82,2°C, besitzt;
und wobei Schritt (7) das Vermahlen des gescherten Klärschlammes aus (6) zusammen mit einem festen kohlenstoffhaltigen Brennstoff in einer Mahlvorrichtung umfaßt, wodurch eine pumpbare Aufschlämmung von Klärschlamm und festem kohlenstoffhaltigen Brennstoff mit einem Feststoffgehalt von 45 bis 70 Gew.-%, einem Gewichtsverhältnis im Bereich von 3-7 Gewichtsteilen Klärschlamm zu 3-7 Gewichtsteilen festem kohlenstoffhaltigen Brennstoff und einer Viskosität von weniger als 2 Pas (2000 Centipoise), wenn gemessen bei 82,2°C (180°F), erzeugt wird.

3. Ein Verfahren nach Anspruch 1 oder Anspruch 2 zur Entsorgung von Klärschlamm, welches weiter umfaßt:
(8) Verbrennen besagter pumpbaren Aufschlämmung von Klärschlamm und festem kohlenstoffhaltigen Brennstoff aus (7) in einem Vergaser mit partieller Oxidation, einem Ofen, einem Kessel oder einem Veraschungsofen, um einen heißen rohen abgehenden Gasstrom zu erzeugen.

4. Ein Verfahren nach einem der Ansprüche 1 bis 3, wobei besagte Konzentration in (1) stattfindet, bevor irgendwelche signifikante bakterielle Wirkung eintritt, die Kohlenstoff und organische Materialien in besagtem Klärschlamm verbraucht.

5. Ein Verfahren nach einem der Ansprüche 1 - 4, wobei Wasser bei einer Temperatur im Bereich von 148,9°C bis 260°C (300°F bis 500°F) in der Reaktionszone von (3) erzeugt wird und besagtes Wasser von dem Klärschlamm abgetrennt und in indirekten Wärmeaustausch mit der Aufschlämmung von Klärschlamm, die in besagte Hydrothermalbehandlungszone geht, geleitet wird.

6. Ein Verfahren nach Anspruch 1 oder Anspruch 2, welches weiter umfaßt:
(9) Einführen besagter pumpbaren Aufschlammung von Klärschlamm und festem kohlenstoffhaltigen Brennstoff aus (8) in die Reaktionszone eines Gasgenerators mit partieller Oxidation über einen Durchlaß eines Mehrwegbrenners, während gleichzeitig durch wenigstens einen anderen Durchlaß besagten Brenners ein Strom aus freien Sauerstoff enthaltendem Gas geleitet wird; und
(10) Reagierenlassen besagter Materialien in besagter partiellen Oxidationsreaktionszone in (9) bei einer Temperatur im Bereich von 982,2°C bis 1926,6°C (1800°F bis 3500°F) und bei einem Druck im Bereich von 101,3 KPa - 30,4 MPa (1-300 Atmosphären), um einen heißen rohen abgehenden Gasstrom zu erzeugen, der wenigstens eines der folgenden umfaßt: Synthesegas, Reduktionsgas und Brenngas.

7. Ein Verfahren nach einem der Ansprüche 1 - 6, wobei zusätzliche Entwässerung durch Pressen besagten Klärschlamms in (1) (a) und/oder (b) bereitgestellt wird, während dieser in Vermischung mit einem Filterhilfsstoff mit einer Teilchengröße von weniger als etwa 2 mm vorliegt, und mit oder ohne Dampf.

8. Ein Verfahren nach einem der Ansprüche 1 - 7, wobei die Wärmebehandlung des Klärschlamms in (3) in einem Autoklaven stattfindet, während besagter Klärschlamm in direktem oder indirektem Wärmeaustausch mit Dampf oder Synthesegas, stromabwärts im Verfahren produziert, steht.

9. Ein Verfahren nach Anspruch 1, wobei in (1) vor und/oder nach besagtem Konzentrationsschritt (a) und/oder (b) Teilchen aus kohlenstoffhaltigem Brennstoff niedriger Qualität mit der Aufschlämmung vermischt oder vermahlen werden; und wobei eine entwässerte Aufschlämmung von Klärschlamm und festem kohlenstoffhaltigen Brennstoff niedriger Qualität erzeugt wird, die einen Gesamtfeststoffgehalt im Bereich von 35 bis 55 Gew.-% aufweist und 30 bis 50 Gew.-% festen kohlenstoffhaltigen Brennstoff niedriger Qualität umfaßt, und der Rest der Feststoffe im wesentlichen Klärschlamm umfaßt;
wobei in (3) besagte entwässerte Aufschlammung von Klärschlamm und festem kohlenstoffhaltigen Brennstoff niedriger Qualität aus (1) wärmebehandelt wird in einer Hydrothermalreaktionszone in der Abwesenheit von Luft, bei einer Temperatur im Bereich von 93,3°C bis 371,1°C (200°F bis 700°F) und bei einem Druck, der bei oder über dem Dampfdruck von Wasser bei der Wärmebehandlungstemperatur liegt, in den folgenden zwei Stufen; (a) Erhitzen bei einer Temperatur im Bereich von 48,9°C bis 162,8°C (120°F bis 325°F) in der Abwesenheit von Luft für eine Verweilzeit von 1 bis 10 Minuten; (b) gefolgt von Erhitzen bei einer Temperatur im Bereich von etwa 204,4°C bis 371,1°C (400°F bis 700°F) in der Abwesenheit von Luft für eine Verweilzeit von 5 bis 120 Minuten;
wobei in (4) die erwärmte Aufschlämmung von Klärschlamm und festem kohlenstoffhaltigen Brennstoff niedrige Qualität aus (3) gehalten wird bei einer Temperatur im Bereich von 246,1°C bis 371,1°C (475°F bis 700°F) in der Abwesenheit von Luft für eine Verweilzeit von 3 bis 90 Minuten und bei einem Druck, der bei oder über dem Dampfdruck von Wasser bei besagter Haltetemperatur liegt, um eine pumpbare wäßrige Aufschlämmung von Klärschlamm und festem kohlenstoffhaltigen Brennstoff niedriger Qualität mit einer Viskosität von weniger als 0,7 Pas (700 Centipoise), wenn gemessen bei 82,2°C (180°F), zu erzeugen;
(5) Abtrennen von überschüssigem Wasser aus der wärmebehandelten und entwässerten Aufschlämmung von Klärschlamm und festem kohlenstoffhaltigen Brennstoff niedriger Qualität aus (4) durch (a) Verringern des Drucks und der entsprechenden Temperatur der wärmebehandelten entwässerten Aufschlämmung von Klärschlamm und festem kohlenstoffhaltigen Brennstoff niedriger Qualität aus (4) in einer Flashverdampfungszone bis zu einem Druck im Bereich von etwa atmosphärischem Druck bis zum Sättigungsdampfdruck vom Wasser bei der Temperatur in besagter Flashverdampfungszone im Bereich von 93,3°C bis 204,4°C (200°F bis 400°F), wodurch Wasser aus besagter Aufschlämmung verdampft und davon abgetrennt wird, und/oder (b) Abkühlen der Aufschlämmung von Klärschlamm und festem kohlenstoffhaltigen Brennstoff niedriger Qualität auf eine Temperatur im Bereich von Umgebungstemperatur bis 73,9°C (165°F), gefolgt von Zentrifugation; wodurch eine pumpbare wäßrige Aufschlämmung von wäßrigem Klärschlamm und festem kohlenstoffhaltigen Brennstoff niedriger Qualität mit einem Feststoffgehalt im Bereich von 45 bis 70 Gew.-% und mit einem spezifischen Brennwert (HHV) im Bereich von 13,9 MJ/kg bis 27,9 MJ/kg (6000 bis 12000 BTU/LB) erzeugt wird:
(6) Scheren der Aufschlämmung von Klärschlamm und festem kohlenstoffhaltigen Brennstoff niedriger Qualität aus (5) in einer Schereinheit bei einer Temperatur im Bereich von Umgebungstemperatur bis 100°C (ca. 212°F) in der Abwesenheit von Luft für einen Zeitraum im Bereich von 10 Sekunden bis 120 Minuten, wodurch eine pumpbare Aufschlämmung von Klärschlamm und festem kohlenstoffhaltigen Brennstoff niedriger Qualität mit einem Feststoffgehalt im Bereich von 45 bis 70 Gew.-%, einem Gewichtsverhältnis im Bereich von 3 - 7 Gewichtsteilen Klärschlamm zu 3-7 Gewichtsteilen festem kohlenstoffhaltigen Brennstoff niedriger Qualität; und einer Viskosität von weniger als 2 Pas (2000 Centipoise), wenn gemessen bei 82,2°C (180°F), erzeugt wird.

10. Ein Verfahren nach Anspruch 1 oder Anspruch 9 zur Entsorgung von Klärschlamm, welches weiter den zusätzlichen Schritt der Verbrennung besagter pumpbaren Aufschlämmung von Klärschlamm und festem kohlenstoffhaltigen Brennstoff niedriger Qualität aus (6) in einem Vergaser mit partieller Oxidation, einem Ofen, einem Kessel oder einem Veraschungsofen, um einen heißen rohen abgehenden Gasstrom zu erzeugen, umfaßt.

11. Ein Verfahren nach einem der Ansprüche 1, 9 und 10, wobei besagte Schereinheit in (6) eine Kammer mit Dampfmantel umfaßt, die eine oder zwei parallele drehbare Wellen enthält, wobei jede Welle mehrere Rührer oder Mischschaufeln enthält, die sich mit einer Geschwindigkeit von 50 bis 600 UPM drehen, wodurch das Material vom Einlaßende der horizontalen Kammer zum gegenüberliegenden Abgabeende befördert wird.

12. Ein Verfahren nach einem der Ansprüche 1, 10 - 11, wobei der Zusatzstoff ethoxyliertes Nonylphenol in besagte Schereinheit in (6) in einer Menge von 0,1 bis 5 Gew.-% der Aufschlämmung eingebracht wird, um die Pumpbarkeit der wäßrigen Aufschlämmung von Klärschlamm und festem kohlenstoffhaltigen Brennstoff niedriger Qualität zu erhöhen.

13. Ein Verfahren nach einem der Ansprüche 1, 10 - 12, wobei die Wärmebehandlung des Klärschlammes in (3) in einem Autoklaven stattfindet, während besagter Klärschlamm in direktem oder indirektem Wärmeaustausch mit stromabwärts im Verfahren erzeugtem Dampf steht.

## Revendications

1. Procédé de préparation d'une suspension de boues d'égout convenant pour la combustion dans un gazéificateur à oxydation partielle, dans un four, dans une chaudière ou dans un incinérateur, comprenant :
(1) le fait de concentrer une suspension aqueuse de boues d'égout ayant une teneur en matières solides dans l'intervalle d'environ 0,5 à 20 % en éliminant l'eau de celle-ci (i) au moyen d'une centrifugeuse, ou (ii) au moyen (a) d'un premier filtre-presse à bande avec lequel ladite suspension de boues d'égout est transportée sur une bande sans fin et une pression de surface dans l'intervalle de 137,9 KPa à 689,5 KPa (20 à 100 psi) est appliquée auxdites boues d'égout à une température dans l'intervalle de la température ambiante à 148,9 °C (300 °F) pendant une durée dans l'intervalle de 0,5 à 60 minutes ; et (b) avec ou sans pressage supplémentaire de la matière venant du premier filtre presse à bande (a) dans un filtre-presse à bande, sans fin, de haute intensité, fonctionnant avec une pression de surface dans l'intervalle de 689,5 KPa à 1,72 MPa (100 à 250 psi) pendant une durée dans l'intervalle de 0,5 à 60 minutes, par exemple de 1 à 30 minutes, et à une température dans l'intervalle de la température ambiante à 148,9 °C (300 °F) pour produire une suspension déshydratée de boues d'égout ayant une teneur totale en matières solides dans l'intervalle de 10 à 55 % en poids ;
(2) le fait de pomper au moyen d'une pompe à déplacement positif ladite suspension déshydratée de boues d'égout provenant de (1) dans un réacteur de traitement hydrothermique dans lequel, par ce pompage, la viscosité de ladite suspension déshydratée est réduite à moins de 60 Pas (6000 centipoises) lorsqu'elle est mesurée à 82,2 °C (180 °F) ;
(3) le fait de traiter par la chaleur ladite suspension déshydratée de boues d'égout provenant de (2) dans ladite zone de traitement hydrothermique en l'absence d'air et à une température dans l'intervalle de 48,9 °C (120 °F) à 371,1 C (700 °F) et sous une pression qui est égale ou supérieure à la pression de vapeur de l'eau à ladite température de traitement par la chaleur dans les deux étapes suivantes ; (a) chauffage à une température dans l'intervalle de 48,9 °C à 162,8 °C (120 °F à 325 °F) en l'absence d'air pendant un temps de séjour de 1 à 10 minutes ; puis (b) chauffage à une température dans l'intervalle de 162,8 °C à 371,1 °C (325 °F à 700 °F) en l'absence d'air pendant un temps de séjour de 2 à 20 minutes ;
(4) le fait de maintenir les boues d'égout chauffées provenant de (3) à une température dans l'intervalle de 232,2 °C à 371,1 °C (450 °F à 700 °F) en l'absence d'air pendant un temps de séjour dans l'intervalle de 2 à 120 minutes et sous une pression qui est égale ou supérieure à la pression de vapeur de l'eau à ladite température de maintien, pour produire une suspension aqueuse pompable de boues d'égout ayant une viscosité inférieure à 0,7 Pas (700 centipoises) lorsqu'elle est mesurée à 82,2 °C (180 °F) ;
(5) le fait de refroidir la suspension de boues d'égout traitée par la chaleur provenant de (4) à une température dans l'intervalle de la température ambiante à moins de 93,3 °C (20 °F) ; ce qui fournit une suspension aqueuse aisément pompable de boues d'égout déshydratées ayant une teneur en matières solides dans l'intervalle de 10 à 55 % en poids et un pouvoir calorifique supérieur (HHV) dans l'intervalle de 13,9 MJ/kg à 18,6 MJ/kg (6.000 à 8.000 BTU/lb) ;
(6) le fait de cisailler la suspension de boues d'égout provenant de (4) dans des moyens de cisaillement à une température dans l'intervalle de la température ambiante à 100 °C (212 °F) en l'absence d'air pendant une durée dans l'intervalle de 10 secondes à 180 minutes pour produire des boues d'égout fluides aisément pompables cisaillées ayant une viscosité dans l'intervalle de 0,05 Pas à 2 Pas (50 centipoises à 2.000 centipoises) lorsqu'elle est mesurée à 82,2 °C (180 °F) ; et
(7) le fait de mélanger ou de broyer un carburant carboné solide avec la suspension de boues d'égout avant et/ou après ladite étape de concentration (a) et/ou (b) de l'étape (1), ou après ledit cisaillement à l'étape (6).

2. Procédé selon la revendication 1, dans lequel dans l'étape (2), la viscosité de ladite suspension déshydratée est réduite à moins de 5 Pas (5.000 centipoises) lorsqu'elle est mesurée à 82,2 °C (180 °F) ;
et dans lequel, dans l'étape (3), le traitement par la chaleur s'effectue à une température dans l'intervalle de 48,9 °C à 287,8 °C (120 °F à 550 °F) et sous une pression qui est fixée à une valeur égale ou supérieure à la pression de vapeur de l'eau à ladite température de traitement par la chaleur dans les deux étapes suivantes ; (a) chauffage à une température dans l'intervalle de 48,9 °C à 162,8 °C (120 °F à 325 °F) en l'absence d'air pendant un temps de séjour de 1 à 10 minutes ; suivi de (b) chauffage à une température dans l'intervalle de 162,8 °C à 287,8 °C (325 °F à 550 °F) en l'absence d'air pendant un temps de séjour de 2 à 20 minutes
et dans lequel, dans l'étape (4), les boues d'égout sont maintenues à une température dans l'intervalle de 232,2 °C à 287,8 °C (450 °F à 550 °F) et produisent une suspension pompable de boues d'égout aqueuses ayant une viscosité inférieure à 6 Pas (600 centipoises) lorsqu'elle est mesurée à environ 82,2 °C (180 °F) ;
et dans lequel, dans l'étape (6), les boues d'égout fluides aisément pompables cisaillées ont une viscosité dans l'intervalle de 0,05 Pas à 0,6 Pas (50 centipoises à 600 centipoises) lorsqu'elle est mesurée à 82,2 °C
et dans lequel l'étape (7) comprend le fait de broyer ensemble les boues d'égout cisaillées provenant de (6) avec un combustible carboné solide dans les moyens de broyage, produisant ainsi une suspension pompable de boues d'égout et de combustible carboné solide ayant une teneur en matières solides dans l'intervalle de 45 à 70 % en poids, un rapport pondéral dans l'intervalle de 3 à 7 parties en poids des boues d'égout à 3 à 7 % en poids du combustible carboné solide et une viscosité inférieure à 2 Pas (2.000 centipoises) lorsqu'elle est mesurée à 82,2 °C (180 °F).

3. Procédé selon la revendication 1 ou la revendication 2 pour l'élimination des boues d'égout comprenant en outre :
(8) le fait de brûler ladite suspension pompable de boues d'égout et de combustible carboné solide provenant de (7) dans un gazéificateur à oxydation partielle, un four, une chaudière ou un incinérateur pour produire un courant de gaz effluent brut chaud.

4. Procédé selon l'une quelconque des revendications 1 à 3, dans lequel ladite concentration en (1) s'effectue avant qu'il ne se produise une action bactérienne significative qui consomme du carbone et des matières organiques dans lesdites boues d'égout.

5. Procédé selon l'une quelconque des revendications 1 à 4, dans lequel de l'eau à une température dans l'intervalle de 148,9 °C à 260 °C (300 °F à 500 °F) est produite dans la zone réactionnelle de (3) et ladite eau est séparée des boues d'égout et circule en échange de chaleur indirect avec la suspension de boues d'égout entrant dans ladite zone de traitement hydrothermique.

6. Procédé selon la revendication 1 ou la revendication 2, comprenant en outre :
(9) le fait d'introduire ladite suspension pompable de boues d'égout et fe combustible carboné solide provenant de (8) dans la zone réactionnelle d'un générateur de gaz à oxydation partielle par un passage d'un brûleur à plusieurs passages tout en envoyant simultanément par au moins un autre passage dudit brûleur un courant de gaz contenant de l'oxygène libre ; et
(10) le fait de faire réagir lesdites matières dans ladite zone réactionnelle d'oxydation partielle dans (9) à une température dans l'intervalle de 982,2 °C à 1926,6 °C (1800 °F à 3500 °F) et sous une pression dans l'intervalle de 101,3 KPa à 30,4 MPa (1 à 300 atmosphères) pour produire un courant de gaz effluent brut chaud comprenant au moins un des gaz suivants : gaz de synthèse, gaz réducteur et gaz combustible.

7. Procédé selon l'une quelconque des revendications 1 à 6, dans lequel une déshydratation supplémentaire est effectuée en comprimant lesdites boues d'égout en (1) (a) et/ou (b) alors qu'elles sont mélangées à un adjuvant de filtration ayant une taille de particules inférieure à environ 2 mm, et avec ou sans vapeur.

8. Procédé selon l'une quelconque des revendications 1 à 7, dans lequel le traitement par la chaleur des boues d'égout dans (3) s'effectue dans un autoclave alors que lesdites boues d'égout sont en échange de chaleur direct ou indirect avec de la vapeur ou un gaz de synthèse produit en aval dans le procédé.

9. Procédé selon la revendication 1, dans lequel, dans (1) avant et/ou après ladite étape de concentration (a) et/ou (b), des particules d'un combustible carboné solide à basse teneur sont mélangées ou broyées avec la suspension de boues d'égout ; et dans lequel est produite une suspension déshydratée de boues d'égout et de combustible carboné solide à basse teneur ayant une teneur totale en matières solides dans l'intervalle de 35 à 55 % en poids et comprenant 30 à 50 % en poids de combustible carboné solide à basse teneur et le reste des matières solides comprenant essentiellement des boues d'égout ; dans lequel, dans (3), on traite par la chaleur ladite suspension déshydratée de boues d'égout et de combustible carboné solide à basse teneur provenant de (1) dans une zone de réaction hydrothermique en l'absence d'air, à une température dans l'intervalle de 93,3 °C à 371,1 °C (200 °F à 700 °F), et sous une pression qui est égale ou supérieure à la pression de vapeur de l'eau à la température de traitement par la chaleur, dans les deux étapes suivantes ; (a) chauffage à une température dans l'intervalle de 48,9 °C à 162,8 °C (120 °F à 325 °F) en l'absence d'air pendant un temps de séjour de 1 à 10 minutes ; (b) suivi d'un chauffage à une température dans l'intervalle d'environ 204,4 °C à 371,1 °C (400 °F à 700 °F) en l'absence d'air pendant un temps de séjour de 5 à 120 minutes ;
dans lequel, dans (4), on maintient la suspension de boues d'égout chauffées et le combustible carboné solide à basse teneur provenant de (3) à une température dans l'intervalle de 246,1 °C à 371,1 °C (475 °F à 700 °F) en l'absence d'air, pendant un temps de séjour de 3 à 90 minutes et sous une pression qui est égale ou supérieure à la pression de vapeur de l'eau à cette température de maintien, pour produire une suspension aqueuse pompable de boues d'égout et de combustible carboné solide à basse teneur ayant une viscosité inférieure à 0,7 Pas (700 centipoises) lorsqu'elle est mesurée à 82,2 °C (180 °F) ;
(5) le fait de séparer l'eau en excès de cette suspension traitée par la chaleur et déshydratée de boues d'égout et de combustible carboné solide à basse teneur provenant de (4) en (a) réduisant la pression et la température correspondante de la suspension déshydratée traitée par la chaleur de boues d'égout et de combustible carboné solide à basse teneur provenant de (4) dans une zone d'évaporation éclair sous une pression dans l'intervalle d'environ la pression atmosphérique à la pression de vapeur saturée de l'eau à la température dans ladite zone d'évaporation éclair dans l'intervalle de 93,3 °C à 204,4 °C (200 °F à 400 °F), évaporant et séparant ainsi l'eau de cette suspension et/ou en (b) refroidissant la suspension de boues d'égout et de combustible carboné solide à basse teneur à une température dans l'intervalle de la température ambiante à 73,9 °C (165 °F), puis en centrifugeant ; fournissant ainsi une suspension aqueuse pompable de boues d'égout déshydratée et de combustible carboné solide à basse teneur ayant une teneur en matières solides dans l'intervalle de 45 à 70 % en poids et ayant un pouvoir calorifique supérieur (HHV) dans l'intervalle de 13,9 MJ/kg à 27,9 MJ/kg (6.000 à 12.000 BTU/lb) ; et
(6) le fait de cisailler la suspension de boues d'égout et de combustible carboné solide à basse teneur provenant de (5) dans des moyens de cisaillement à une température dans l'intervalle de la température ambiante à 100 °C (212 °F) en l'absence d'air pendant une durée dans l'intervalle de 10 secondes à 120 minutes, produisant ainsi une suspension pompable de boues d'égout et de combustible carboné solide à basse teneur ayant une teneur en matières solides dans l'intervalle de 45 à 70 % en poids, un rapport pondéral dans l'intervalle de 3 à 7 parties en poids de boues d'égout à 3 à 7 parties en poids de combustible carboné solide à basse teneur ; et une viscosité inférieure à 2 Pas (2000 centipoises) lorsqu'elle est mesurée à 82,2 °C (180 °F).

10. Procédé selon la revendication 1 ou la revendication 9 pour éliminer des boues d'égout comprenant en outre l'étape supplémentaire consistant à brûler cette suspension pompable de boues d'égout et de combustible carboné solide à basse teneur provenant de (6) dans un gazéificateur à oxydation partielle, un four, une chaudière ou un incinérateur pour produire un courant de gaz effluent brut chaud.

11. Procédé selon l'une quelconque des revendications 1, 9 et 10, dans lequel les moyens de cisaillement dans (6) comprennent une enceinte munie d'une chemise à vapeur contenant un ou deux arbres rotatifs, parallèles, chacun des arbres comportant plusieurs agitateurs ou pales de mélange qui tournent à une vitesse de 50 à 600 tours/minute, déplaçant ainsi la matière de l'extrémité d'admission de l'enceinte horizontale à l'extrémité d'évacuation opposée.

12. Procédé selon l'une quelconque des revendications 1, 10 et 11, dans lequel l'additif nonylphénol éthoxylé est introduit dans lesdits moyens de cisaillement en (6) à raison de 0,1 à 5 % en poids de la suspension pour augmenter l'aptitude au pompage de la suspension aqueuse de boues d'égout et de combustible carboné solide à basse teneur.

13. Procédé selon l'une quelconque des revendications 1, 10 à 12, dans lequel le traitement par la chaleur des boues d'égout dans (3) s'effectue dans un autoclave alors que lesdites boues d'égout sont en échange de chaleur direct ou indirect avec la vapeur produite en aval dans le procédé.
